# EUROPEAN PATENT APPLICATION

(11) **EP 2 874 284 A2**
(43) Date of publication of application: **20.05.2015**
(21) Application number: 14193174.1
(22) Date of filing: 14.11.2014
(51) Int. Cl.: H02K 5/22

(54) **Rotating electrical machine cable**

(30) Priority: 19.11.2013 JP 2013238601
(71) Applicant: Kabushiki Kaisha Yaskawa Denki, Kitakyushu-shi, Fukuoka 806-0004 (JP)
(72) Inventor: Yoshizawa, Naotake, Kitakyushu-shi, Fukuoka 806-0004 (JP)
(74) Representative: Viering, Jentschura & Partner Patent- und Rechtsanwälte

(57) **Abstract**

A rotating electrical machine cable (10) includes: one cable unit (11) arranged between a rotating electrical machine (1) including an encoder and a control apparatus; a rotating electrical machine side connector case (14) for accommodating a rotating electrical machine side connector (13) connected to one end of the cable unit (11) and connected to the rotating electrical machine; and an encoder side connector case (16) for accommodating an encoder side connector (15) connected to one end of the cable unit and connected to the encoder. This rotating electrical machine cable has high handleability when wiring.

## Description

### BACKGROUND

### 1. Technical Field

The embodiments of the present disclosure relate to a rotating electrical machine cable.

### 2. Description of the Related Art

Japanese Patent Application Laid-open No. 2008-191874 (FIG. 1) discloses a servo driver system. In this system, each of a servo motor and an encoder is connected to a servo amplifier by a motor cable and an encoder cable, respectively.

In the above-described conventional art, two cables are used for the wiring from the servo motor and the encoder to the servo amplifier. Thus, there are problems that the handleability when wiring cables is reduced and the redundant workload such as bundling the two cables and the like is caused.

One form of the embodiments has been made in view of the above problems. One of the purposes of one form of the embodiments is to provide a rotating electrical machine cable that allows for the improvement of the handleability when wiring.

### SUMMARY

According to one aspect of the embodiments, a rotating electrical machine cable includes: one cable unit arranged between a rotating electrical machine including an encoder and a control apparatus; a rotating electrical machine side connector case for accommodating a rotating electrical machine side connector connected to one end of the cable unit and connected to the rotating electrical machine; and an encoder side connector case for accommodating an encoder side connector connected to one end of the cable unit and connected to the encoder.

Further, according to another aspect of the embodiments, the rotating electrical machine cable for the rotating electrical machine has a cable unit arranged between the rotating electrical machine having an encoder and a control apparatus, a rotating electrical machine side connector case for accommodating a rotating electrical machine side connector connected to one end of the cable unit and connected to the rotating electrical machine, an encoder side connector case accommodating for an encoder side connector connected to one end of the cable unit and connected to the encoder, and means for distinguishing the directions in which the cable unit is drawn from the rotating electrical machine and the encoder.

According to the above aspects in the embodiments, the handleability when wiring the rotating electrical machine cable can be improved.

### BRIEF DESCRIPTION OF THE DRAWINGS

FIG. 1A is a schematic view illustrating a configuration of a rotating electrical machine cable drawn to a load side, together with a rotating electrical machine, according to an embodiment;
FIG. 1B is a schematic view illustrating a configuration of the rotating electrical machine cable drawn to an anti-load side, together with the rotating electrical machine;
FIG. 2A is a schematic view illustrating a configuration of the rotating electrical machine cable drawn to the load side, according to an embodiment;
FIG. 2B is a schematic view illustrating a configuration of the rotating electrical machine cable drawn to the anti-load side;
FIG. 3 is a sectional view illustrating an internal configuration of a cable unit by an X-X cross section in FIG. 1A, FIG. 1B, FIG. 2A, and FIG. 2B;
FIG. 4A is a schematic view illustrating a configuration of a rotating electrical machine cable drawn to the load side together with a rotating electrical machine in a modified example in which a power side connector case and an encoder side connector case are connected in series to each other to one end of the cable unit;
FIG. 4B is a schematic view illustrating a configuration of the rotating electrical machine cable drawn to the anti-load side together with the rotating electrical machine in the above modified example;
FIG. 5A is a schematic views illustrating a configuration of a rotating electrical machine cable drawn to the load side in a modified example in which a branching tube is configured to expose an encoder side cable; and
FIG. 5B is a schematic views illustrating a configuration of the rotating electrical machine cable drawn to the anti-load side in the above modified example.

### DESCRIPTION OF THE EMBODIMENTS

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

One embodiment will be described below by referring to the drawings. It is noted that, in the followings, the directions of upper, under, left, and right will be used for the purpose of illustration of the configuration of the rotating electrical machine and so on. However, these directions do not limit the positional relationship among respective components of the rotating electrical machine and so on.

### < External configuration of a rotating electrical machine having a rotating electrical machine cable >

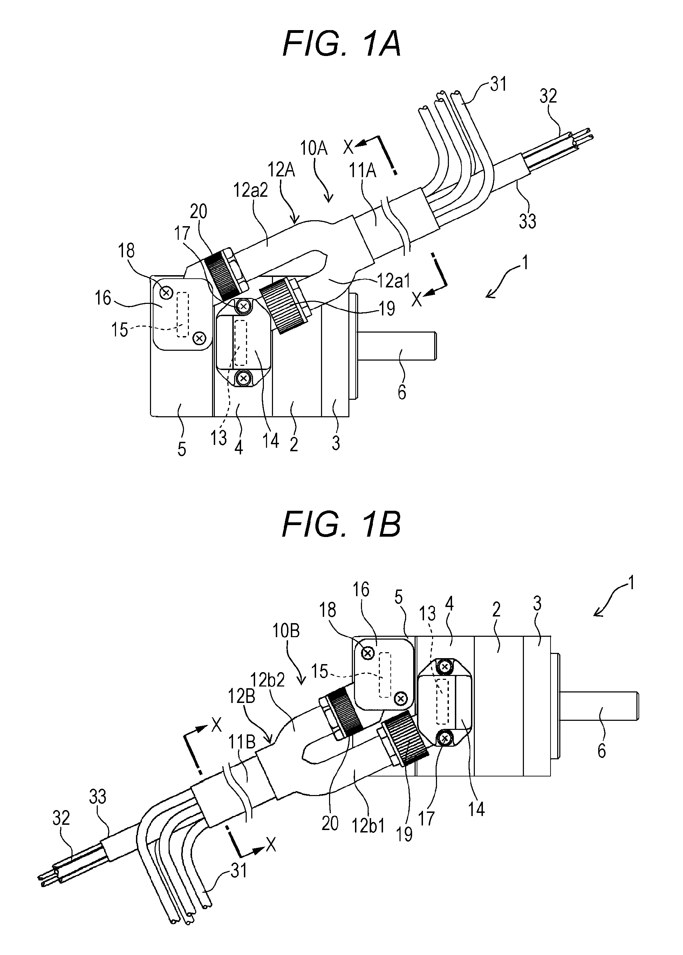

Firstly, FIG. 1A and FIG. 1B are used to describe an external configuration of a rotating electrical machine 1 having a rotating electrical machine cable, according to the present embodiment. FIG. 1A is a top view of the rotating electrical machine 1 having a rotating electrical machine cable drawn to the load side 10A (hereafter, referred to as "load side drawn cable 10A"). FIG. 1B is a top view of the rotating electrical machine 1 having a rotating electrical machine cable drawn to the anti-load side 10B (hereafter, referred to as "anti-load side drawn cable 10B"). It is noted that, in the present specification, the term "load side" specifies the direction in which a rotating shaft 6 projects with respect to the rotating electrical machine 1 (the right side in FIG. 1A and FIG. 1B). On the other hand, the term "anti-load side" specifies the opposite direction to the load side, that is, the direction in which an encoder cover 5 is arranged with respect to the rotating electrical machine 1 (the left side in FIG. 1A and FIG. 1B).

As illustrated in FIG. 1A and FIG. 1B, the rotating electrical machine 1 has a cylindrical unit frame 2, an anti-load side bracket 4, a load side bracket 3, and an encoder cover 5. The anti-load side bracket 4 is provided to one end in the axial direction of the unit frame 2 (the left side in FIG. 1A and FIG. 1B). The load side bracket 3 is provided to the other end in the axial direction of the unit frame 2 (the right side in FIG. 1A and FIG. 1B). The encoder cover 5 is provided to one end in the axial direction of the anti-load side bracket 4. There are not-shown stator and rotor within the unit frame 2. The stator and the rotor are arranged opposed to each other with a magnetic gap in the radial direction. The rotating shaft 6 mounted to the rotor is supported by the load side bracket 3 and the anti-load side bracket 4 in a rotatable manner via a not-shown bearing. The encoder cover 5 covers a not-shown encoder provided to the anti-load side end of the rotating shaft 6.

### < Configuration of the load side drawn cable >

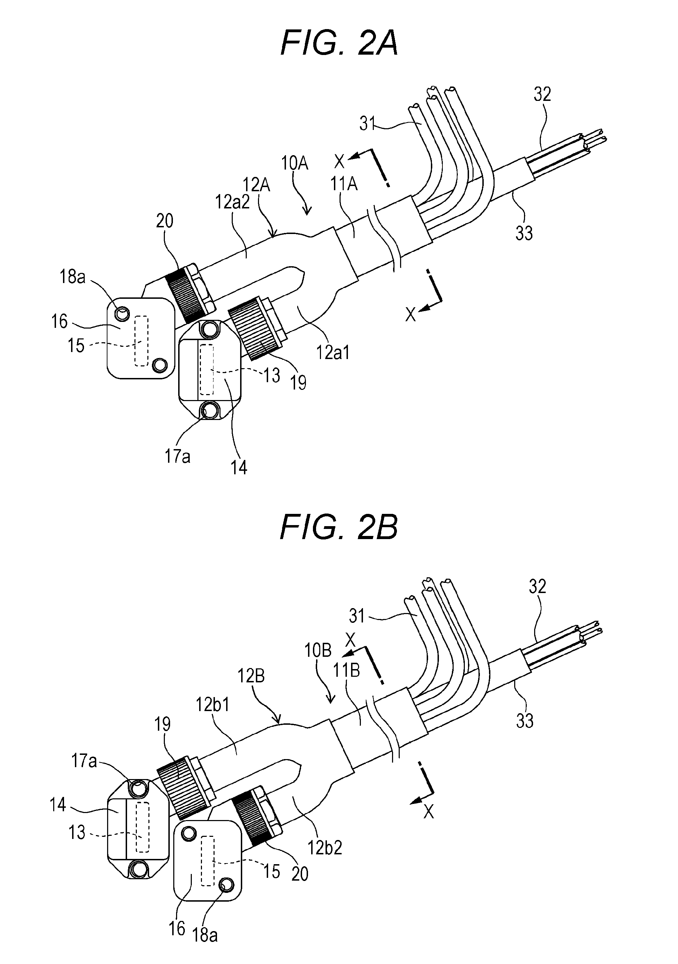

The configuration of the load side drawn cable 10A will be described by using FIG. 1A and FIG. 2A. As illustrated in FIG. 1A and FIG. 2A, the load side drawn cable 10A has one cable unit 11A, a branching tube 12A (a branching member), a power side connector case 14 (a rotating electrical machine side connector case), an encoder side connector case 16, a power side connector 13 (a rotating electrical machine side connector), and an encoder side connector 15. The cable unit 11A is arranged between the rotating electrical machine 1 having an encoder (not shown) and a control apparatus (not shown). The branching tube 12A is connected to one end of the cable unit 11A (the left side in FIG. 1A and FIG. 2A). The power side connector case 14 and the encoder side connector case 16 are connected in parallel to each other to one end of the cable unit 11A via the branching tube 12A. The power side connector 13 is accommodated in the power side connector case 14. The encoder side connector 15 is accommodated in the encoder side connector case 16.

It is noted that, the term "connected in parallel" refers to the situation that the power side connector case 14 and the encoder side connector case 16 are connected to one end of the one cable unit 11A by forked cable structure. Further, in the example illustrated in FIG. 1A and FIG. 2A, the load side drawn cable 10A is configured to be drawn to the load side with the attitude inclined with respect to the axial direction of the rotating shaft 6. However, the load side drawn cable 10A is not limited to the above, but may be configured to be drawn to the load side with the attitude parallel to the axial direction, for example.

The branching tube 12A is made of a flexible waterproof material such as a rubber, a resin, or the like. The branching tube 12A has two branching parts 12a1 and 12a2. The branching tube 12A is configured such that the lengths of the two branching parts 12a1 and 12a2 are different to each other. In this example, the branching tube 12A is configured such that the branching part 12a2 is longer than the branching part 12a1.

Within one branching part 12a1 of the branching tube 12A, a plurality of (four, in this example) power side cables 31 (the rotating electrical machine side cable) branched from the cable unit 11A is wired. On the other hand, within the other branching part 12a2 of the branching tube 12A, a plurality of (six, in this example) encoder side cables 32 branched from the cable unit 11A is wired. The power side connector case 14 is connected to the one branching part 12a1 of the branching tube 12A via a coupling 19. The power side connector 13 accommodated in the power side connector case 14 is connected to the power side cables 31 wired within the branching part 21a1. Further, the encoder side connector case 16 is connected to the other branching part 12a2 of the branching tube 12A via a coupling 20. The encoder side connector 15 accommodated in the encoder side connector case 16 is connected to the encoder side cables 32 wired within the branching part 12a2.

The anti-load side bracket 4 is provided with not-shown connection terminals of the rotating electrical machine 1 (the connection terminals for power supply to the coil winding mounted to the stator and for frame grounding). The power side connector 13 is connected to these connection terminals. The power side connector case 14 accommodates the power side connector 13 so as to cover it from the upper side. The power side connector case 14 is fixed to the anti-load side bracket 4 via screws 17 inserted through screw holes 17a provided in two positions at both ends of the power side connector case 14. Further, the encoder cover 5 is provided with not-shown connection terminals of the encoder (the connection terminals for power supply to the encoder and for signaling). The encoder side connector 15 is connected to these connection terminals. The encoder side connector case 16 accommodates the encoder side connector 15 so as to cover it from the upper side. The encoder side connector case 16 is fixed to the encoder cover 5 via screws 18 inserted through screw holes 18a provided in two positions at both ends in the diagonal direction of the encoder side connector case 16.

It is noted that, in FIG. 1A and FIG. 2A, the other sides of the power side cables 31 and the encoder side cables 32 are illustrated as if they were exposed and loosen out of the cable unit 11A for the purpose of illustration of the cable arrangement. In the actual implementation, however, the power side cables 31 and the encoder side cables 32 are not exposed in the middle of the cable unit 11A. The other end of the cable unit 11A is provided with the branching structure similar to one end of the cable unit 11. The other ends of the respective connectors of the power side cables 31 and the encoder side cables 32 are connected to the not-shown control apparatus. These features are the same as those in FIG. 1B and FIG. 2B.

### < Configuration of the anti-load side drawn cable >

The configuration of the anti-load side drawn cable 10B will be described by using FIG. 1B and FIG. 2B. As illustrated in FIG. 1B and FIG. 2B, the anti-load side drawn cable 10B has one cable unit 11B, a branching tube 12B (a branching member), a power side connector case 14, an encoder side connector case 16, a power side connector 13, and an encoder side connector 15. The branching tube 12B is connected to one end of the cable unit 11B (the right side in FIG. 1B and the left side in FIG. 2B). The power side connector case 14 and the encoder side connector case 16 are connected in parallel to each other to one end of the cable unit 11B via the branching tube 12B. The power side connector 13 is accommodated in the power side connector case 14. The encoder side connector 15 is accommodated in the encoder side connector case 16.

It is noted that, in the example illustrated in FIG. 1B and FIG. 2B, the anti-load side drawn cable 10B is configured to be drawn to the anti-load side with the attitude inclined with respect to the axial direction of the rotating shaft 6. However, the anti-load side drawn cable 10B is not limited to the above, but may be configured to be drawn to the anti-load side with the attitude parallel to the axial direction, for example.

The branching tube 12B is made of a flexible waterproof material such as a rubber, a resin, or the like. The branching tube 12B has two branching parts 12b1 and 12b2. The branching tube 12B is configured such that the lengths of the two branching parts 12b1 and 12b2 are different to each other. In this example, the branching tube 12B is configured such that the branching part 12b1 is longer than the branching part 12b2.

Within one branching part 12b1 of the branching tube 12B, a plurality of (four, in this example) power side cables 31 branched from the cable unit 11B is wired. On the other hand, within the other branching part 12b2 of the branching tube 12B, a plurality of (six, in this example) encoder side cables 32 branched from the cable unit 11B is wired. The power side connector case 14 is connected to the one branching part 12b1 of the branching tube 12B via a coupling 19. The power side connector 13 accommodated in the power side connector case 14 is connected to the power side cables 31 wired within the branching part 21b1. Further, the encoder side connector case 16 is connected to the other branching part 12b2 of the branching tube 12B via a coupling 20. The encoder side connector 15 accommodated in the encoder side connector case 16 is connected to the encoder side cables 32 wired within the branching part 12b2.

The connection of the power side connector 13 to the connection terminals of the rotating electrical machine 1, the fixation of the power side connector case 14 to the anti-load side bracket 4, the connection of the encoder side connector 15 to the connection terminals of the encoder, the fixation of the encoder side connector case 16 to the encoder cover 5, and so on in the anti-load side drawn cable 10B are the same as those in the load side drawn cable 10A.

### < Internal configuration of the cable unit >

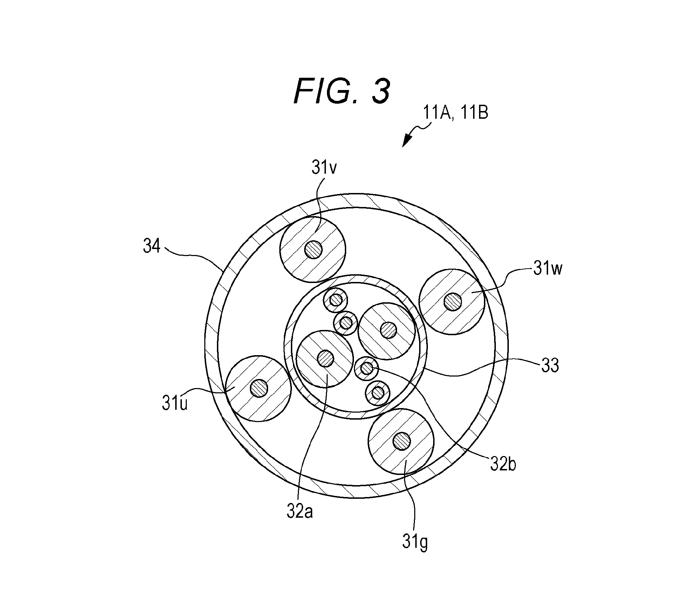

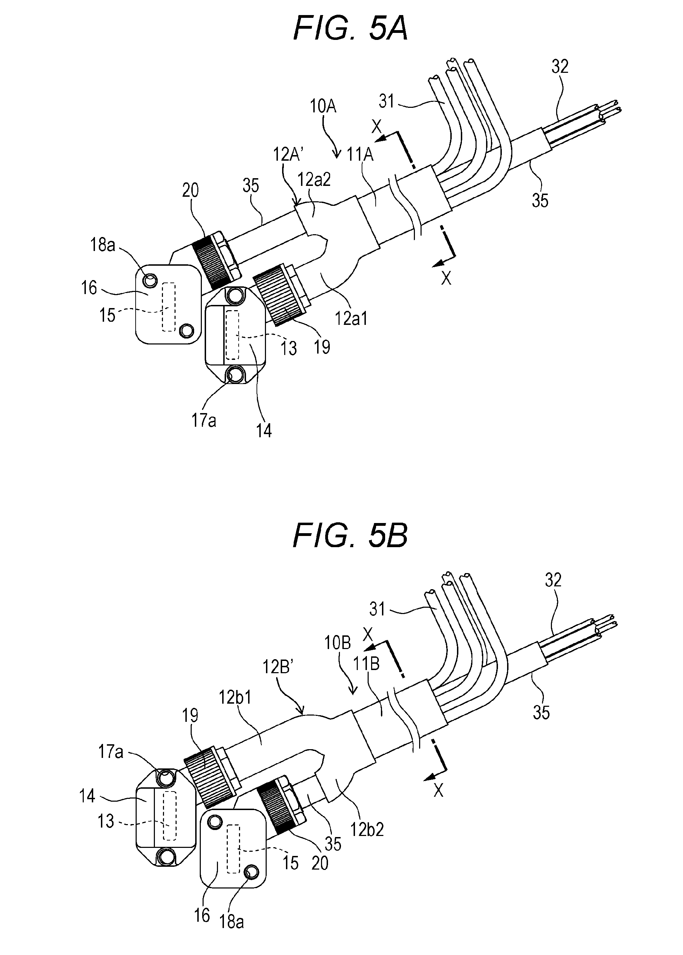

FIG. 3 illustrates the internal configuration of the cable units 11A and 11B. As illustrated in FIG. 3, the cable units 11A and 11B have therein the plurality of (six, in this example) encoder side cables 32 and the plurality of (four, in this example) power side cables 31. The plurality of encoder side cables 32 has relatively thick cables 32a for the power supply to the encoder and relatively thin cables 32b for the signaling to the encoder. In this specification, when the encoder side cables 32a and the encoder side cables 32b are not distinguished in particular, these are referred to as simply "encoder side cables 32". The plurality of encoder side cables 32 is covered with a shield material 33 for suppressing penetration of an electromagnetic wave. It is noted that the encoder side cables 32 may be configured such that the plurality of encoder side cables 32 is covered with a sheath 35 (see FIG. 5A and FIG. 5B described later) arranged in the outer peripheral side of the shield material 33, though the depiction is omitted here.

On the other hand, the plurality of (four, in this example) power side cables 31 has power supply cables 31u, 31v, and 31w for a U phase, a V phase, and a W phase and a frame grounding cable 31g. In the present specification, when the power side cables 31u, 31v, 31w, and 31g are not distinguished in particular, these are referred to as simply "power side cables 31". The plurality of power side cables 31 is arranged in the outer peripheral side of the encoder side cables 32. The plurality of power side cables 31 is covered with a sheath 34 having an insulating property, a waterproof property, and so on.

### < Advantages of the embodiment >

Next, the advantages of the present embodiment will be described. It is noted that, in the followings, when the load side drawn cable 10A and the anti-load side drawn cable 10B are not distinguished in particular, these are referred to as simply "rotating electrical machine cable 10". Further, when the cable unit 11A and 11B are not distinguished in particular, these are referred to as simply "cable unit 11". Furthermore, when the branching tubes 12A and 12B are not distinguished in particular, these are referred to as simply "branching tube 12".

As described above, the rotating electrical machine cable 10 of the present embodiment is the cable used for wiring between the rotating electrical machine 1 having the encoder and the control apparatus. The rotating electrical machine cable 10 has one cable unit 11, and the power side connector case 14 and the encoder side connector case 16 that are connected to one end of the cable unit 11. The power side connector 13 accommodated in the power side connector case 14 is connected to the rotating electrical machine 1. The encoder side connector 15 accommodated in the encoder side connector case 16 is connected to the encoder.

In this way, the rotating electrical machine cable 10 of the present embodiment is configured as one cable. Therefore, the rotating electrical machine cable 10 allows for the improvement of the handleability when wiring cables compared to the case where two cables are used for wiring from each of the rotating electrical machine 1 and the encoder to the control apparatus. Further, the operation such as the bundling of the two cables when wiring is no longer necessary. This allows for the reduction in the workload.

Further, both of the power side connector 13 and the encoder side connector 15 are accommodated in the connector cases 14 and 16, respectively. Therefore, the waterproof and dustproof structure can be provided to the connection parts of the connectors 13 and 15.

Further, in the present embodiment, in particular, the power side connector case 14 and the encoder side connector case 16 are connected in parallel to each other to one end of the cable unit 11. Thereby, the flexibility in the arrangement of the power side connector 13 and the encoder side connector 15 can be enhanced with the gap between both cases 14 and 16 being increased or decreased and the like.

Further, in the present embodiment, in particular, the rotating electrical machine cable 10 has the branching tube 12 connected to one end of the cable unit 11. The branching tube 12A (or the branching tube 12B, hereafter, the same relationship will apply) has two branching parts 12a1 and 12a2 (or branching parts 12b1 and 12b2). One branching part 12a1 (or 12b1) is connected with the power side connector case 14. The other branching part 12a2 (or 12b2) is connected with the encoder side connector case 16.

This allows the cables wired between one end of the cable unit 11 and each of the connector cases 14 and 16 (the power side cables 31 and the encoder side cables 32) to be covered by the branching tube 12. Therefore, the rotating electrical machine cable having a high waterproof and dustproof function can be achieved.

Further, in the present embodiment, in particular, the branching tube 12A is configured such that the length of one branching part 12a1 and that of the other branching part 12a2 are different to each other. The same applies to the branching tube 12B. This allows for the following advantages.

Consideration will be provided for a case where two cables were used for wiring from each of the rotating electrical machine 1 and the encoder to the control apparatus and an attempt were made to configure the cable to be able to be drawn in both directions of the load side and the anti-load side of the rotating electrical machine 1. In this case, because of the restriction that the pin alignment of the connector arranged to the rotating electrical machine 1 and the encoder cannot be changed, two types of the cables (four cables in total) would be necessary for the drawing to the load side and for the drawing to the anti-load side with respect to each of the power side cables 31 and the encoder side cables 32. This would result in the increased line-up of the cables. Further, it would be difficult to identify two types of cables by the external appearance, which would likely to cause the error in the combination of the cables.

In the present embodiment, however, each of the branching tubes 12A and 12B is configured such that the length of the two branching parts are different to each other, as described above. That is, in the load side drawn cable 10A, the other branching part 12a2 of the branching tube 12A is longer than the one branching part 12a1. Further, in the anti-load side drawn cable 10B, the one branching part 12b1 of the branching tube 12B is longer than the other branching part 12b2. This makes it easier to identify the two types of cables, which are the load side drawn cable 10A and the anti-load side drawn cable 10B, by the external appearance based on the relationship between the lengths of the two branching parts. Therefore, the error in distinguishing the load side drawn cable from the anti-load side drawn cable can be suppressed. Further, only two cables are necessary, which allows for the reduction of the line-up of the cable.

It is noted that, based on the above description, the branching parts 12a1 and 12a2 of the branching tube 12A and the branching parts 12b1 and 12b2 of the branching tube 12B correspond an example of the means for distinguishing directions in which the cable is drawn from the rotating electrical machine and the encoder.

Further, in the present embodiment, in particular, the cable unit 11 has therein the encoder side cables 32 and the power side cables 31 arranged in the outer peripheral side of the encoder side cables 32. The encoder side cables 32 that are likely to be affected by noise are arranged in the inner circumference side of the power side cables 31. Thereby, the affection by the external noise to the encoder side cables 32 can be reduced. Further, the shield material 33 is arranged between the encoder side cables 32 and the power side cables 31. Thereby, the affection by the noise from the power side cables 31 to the encoder side cables 32 can also be reduced. Moreover, the relatively thick power side cables 31 are arranged in the outer peripheral side of the relatively thin encoder side cables 32. This allows for a thinner cable unit 11 compared to the case of the opposite arrangement.

### < Modified examples >

It is noted that the embodiments of the disclosure are not limited to the above, but can be modified in various ways without departing from their essence and technical concept. Such modified examples will be described below.

### (1) A case that two connector cases are connected in series to each other to one end of the cable unit

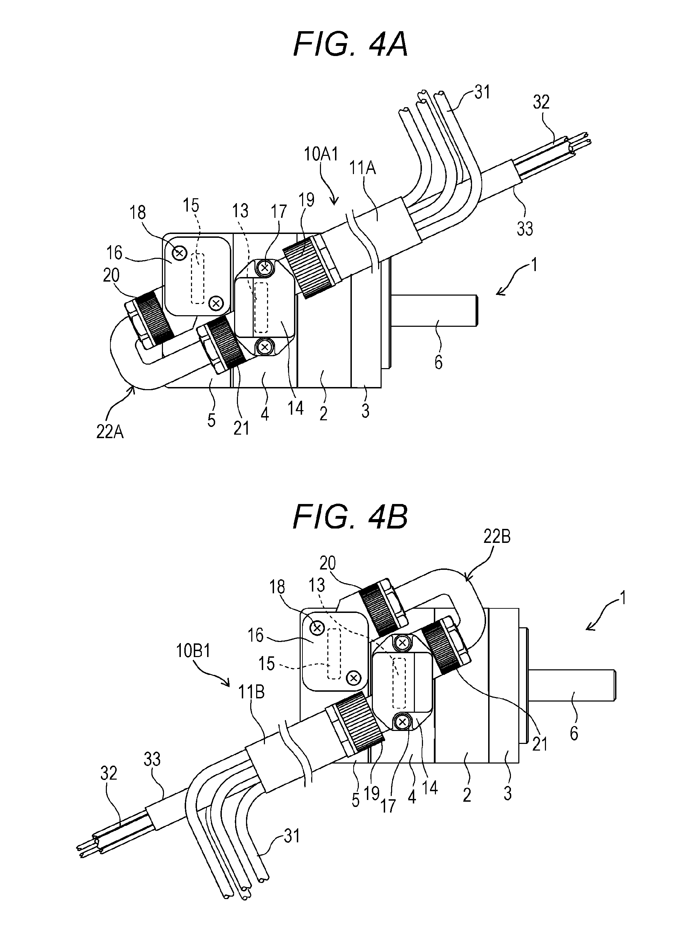

In the above-described embodiment, the case that the power side connector case 14 and the encoder side connector case 16 are connected in parallel to each other to one end of the cable unit 11 has been described as an example. Instead, the two connector cases 14 and 16 may be connected in series to each other to one end of the cable unit 11. FIG. 4A and FIG. 4B illustrate an example of the present modified example.

It is noted that the above-mentioned term "connected in series" refers to the situation that the power side connector case 14 and the encoder side connector case 16 are connected to one end of one cable unit 11 by single cable structure without interposing the branching structure.

FIG. 4A is a top view of the rotating electrical machine 1 having a rotating electrical machine cable drawn to the load side 10A1 (hereafter, referred to as "load side drawn cable 10A1"). FIG. 4B is a top view of the rotating electrical machine 1 having a rotating electrical machine cable drawn to the anti-load side 10B1 (hereafter, referred to as "anti-load side drawn cable 10B1"). In FIG. 4A and FIG. 4B, the same members as those in FIG. 1A and FIG. 1B are provided with the same reference numerals and description thereof will be properly omitted or simplified.

The load side drawn cable 10A1 has a connection tube 22A connecting the power side connector case 14 to the encoder side connector case 16, as illustrated in FIG. 4A. The connection tube 22A is made of a flexible waterproof material such as a rubber, a resin, or the like.

The cable unit 11A is connected to the power side connector case 14 via the coupling 19. That is, the power side connector case 14 is arranged between the cable unit 11A and the encoder side connector case 16. The power side connector 13 accommodated in the power side connector case 14 is connected to a plurality of (four, in this example) power side cables 31 wired within the cable unit 11A.

One end of the connection tube 22A is connected to the power side connector case 14 via the coupling 21. The other end of the connection tube 22A is connected to the encoder side connector case 16 via the coupling 20. Within the connection tube 22A, a plurality of (six, in this example) encoder side cables 32 is wired. These encoder side cables 32, within the power side connector case 14, are guided from the cable unit 11A so as to circumvent the power side connector 13. These encoder side cables 32 are connected to the encoder side connector 15 accommodated in the encoder side connector case 16.

The anti-load side drawn cable 10B1 has a connection tube 22B connecting the power side connector case 14 to the encoder side connector case 16, as illustrated in FIG. 4B. The connection tube 22B is made of a flexible waterproof material such as a rubber, a resin, or the like.

The cable unit 11B is connected to the power side connector case 14 via the coupling 19. That is, the power side connector case 14 is arranged between the cable unit 11B and the encoder side connector case 16. The power side connector 13 accommodated in the power side connector case 14 is connected to a plurality of (four, in this example) power side cables 31 wired within the cable unit 11B.

One end of the connection tube 22B is connected to the power side connector case 14 via the coupling 21. The other end of the connection tube 22B is connected to the encoder side connector case 16 via the coupling 20. Within the connection tube 22B, a plurality of (six, in this example) encoder side cables 32 is wired. These encoder side cables 32, within the power side connector case 14, are guided from the cable unit 11B so as to circumvent the power side connector 13. These encoder side cables 32 are connected to the encoder side connector 15 accommodated in the encoder side connector case 16. It is noted that the internal structure of the cable units 11A and 11B is the same as that of the above-described embodiment.

Next, the advantages of the present modified example will be described. It is noted that, in the followings, when the load side drawn cable 10A1 and the anti-load side drawn cable 10B1 are not distinguished in particular, these are referred to as simply "rotating electrical machine cable 10" similarly to the embodiment described above. Further, when the connection tubes 22A and 22B are not distinguished in particular, these are referred to as simply "connection tube 22".

In the present modified example, the power side connector case 14 and the encoder side connector case 16 are connected in series to each other to one end of the cable unit 11. Since this eliminates the need for the branching structure, the structure can be simplified. Further, the rotating electrical machine cable 10 can be configured as one cable over its entirety. Thus, the rotating electrical machine cable 10 can be thinner compared to the configuration of the parallel connection as in the above-described embodiment.

Further, in the cable configuration in which the power side connector case 14 and the encoder side connector case 16 are connected in series to each other as in the present modified example, the connectors 13 and 15 are arranged close to each other in the rotating electrical machine 1. The connection tube 22 connecting both connector cases 14 and 16 is thus guided curved to a large extent. Here, in a case where the power side connector case 14 and the encoder side connector case 16 were arranged in series to each other with the power side connector case 14 being arranged in the front end, the cables wired within the connection tube 22 would be the relatively thick power side cables 31. This would make it difficult to guide the connection tube 22.

In the present modified example, however, the power side connector case 14 is arranged between the cable unit 11 and the encoder side connector case 16. That is, in the rotating electrical machine cable 10, the power side connector case 14 and the encoder side connector case 16 are arranged in series to each other such that the encoder side connector case 16 is arranged in the front end. This results in that the cables wired within the connection tube 22 are the relatively thin encoder side cables 32. This makes it easier to guide the connection tube 22. Therefore, the handleability when wiring the cables (the connection tube 22) can be improved.

It is noted that, although being configured such that the encoder side connector case 16 is arranged in the front end in the above-described modified example, the rotating electrical machine cable 10 is not limited to it. For example, when the connectors 13 and 15 are arranged spaced apart to each other, since the degree of the curve in the connection tube 22 is smaller, the rotating electrical machine cable 10 may be configured such that the power side connector case 14 is arranged in the front end.

Further, in the above-described modified example, the case that the power side connector case 14 and the encoder side connector case 16 are connected by the connection tube 22 has been described as an example. However, the connection tube 22 may not be necessarily provided. For example, the rotating electrical machine cable 10 may be configured such that the plurality of the encoder side cables 32 is covered with the shield material 33 and the sheath 35 in the outer peripheral side thereof (see FIG. 5A and FIG. 5B described later), and may not have the connection tubes 22. In this case, the power side connector case 14 and the encoder side connector case 16 may be connected by the sheath 35 within which the encoder side cables 32 are wired.

### (2) A case that the branching tube is configured such that the encoder side cables are exposed

In the embodiment illustrated in FIG. 2A and FIG. 2B, the case that the branching tube 12 is configured so as to cover both of the power side cables 31 and the encoder side cables 32 has been described as an example. Instead, the branching tube 12 may be configured such that the encoder side cables 32 are exposed. FIG. 5A and FIG. 5B illustrate an example of the present modified example. It is noted that, in FIG. 5A and FIG. 5B, the same parts as those in the above-described FIG. 2A and FIG. 2B are provided with the same reference numerals and description thereof will be properly omitted.

As illustrated in FIG. 5A and FIG. 5B, the branching tube 12A' of the load side drawn cable 10A has two branching parts 12a1 and 12a2 in the present modified example. The branching part 12a2 is formed shorter than that in the embodiment illustrated in FIG. 2A and FIG. 2B. The encoder side cables 32 are thus exposed. In the present modified example, since the encoder side cables 32 are exposed in this way, the plurality of the encoder side cables 32 is covered with the shield material 33 (depiction is omitted in FIG. 5A and FIG. 5B) and the sheath 35 in the outer peripheral side thereof. The sheath 35 is made of the material having an insulating property, a waterproof property, and the like. It is noted that the configuration of the branching part 12a1 side is the same as that in the embodiment illustrated in FIG. 2A.

The branching tube 12B' of the anti-load side drawn cable 10B has the same configuration as the above. That is, the branching part 12b2 is formed relatively shorter, and the sheath 35 of the encoder side cables 32 is exposed.

In the present modified example, the same advantages as in the above-described embodiment can be obtained.

### (3) Other

In the above description, the cable unit 11 is configured such that the power side cables 31 are arranged in the outer peripheral side of the encoder side cables 32. Without limited to it and contrary to it, however, the cable unit 11 may be configured such that the encoder side cables 32 are arranged in the outer peripheral side of the power side cables 31.

Further, the embodiment and the modified examples as described above are applicable to the case where the rotating electrical machine 1 is any one of the motor and the power generator.

Further, "parallel" in the above description may not be the parallel in the strict sense. That is, the term "parallel" refers to "substantially parallel", which permits the tolerance and error in the design and manufacturing.

Further, other than the configurations that have already been described above, the schemes by the above-described embodiment and each of the modified examples may be utilized in proper combination.

Besides, the above-described embodiment and each of the modified examples may be implemented with various modifications added without departing from its essence, though not exemplified one by one.

Further, the rotating electrical machine cable according to the embodiment of the present disclosure may be the following first and second rotating electrical machine cables.

The first rotating electrical machine cable is a rotating electrical machine cable used for wiring between a rotating electrical machine having an encoder and a control apparatus, and the cable has one cable unit, a rotating electrical machine side connector case for accommodating a rotating electrical machine side connector connected to one end of the cable unit and connected to the rotating electrical machine, and an encoder side connector case for accommodating an encoder side connector connected to one end of the cable unit and connected to the encoder.

The second rotating electrical machine cable is a rotating electrical machine cable used for wiring between a rotating electrical machine having an encoder and a control apparatus, and the cable has one cable unit, a rotating electrical machine side connector case for accommodating a rotating electrical machine side connector connected to one end of the cable unit and connected to the rotating electrical machine, an encoder side connector case for accommodating an encoder side connector connected to one end of the cable unit and connected to the encoder, and means for distinguishing directions in which the cable is drawn from the rotating electrical machine and the encoder.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A rotating electrical machine cable (10), the cable **characterized by**:
one cable unit (11) arranged between a rotating electrical machine (1) including an encoder and a control apparatus;
a rotating electrical machine side connector case (14) for accommodating a rotating electrical machine side connector (13) connected to one end of the cable unit (11) and connected to the rotating electrical machine; and
an encoder side connector case (16) for accommodating an encoder side connector (15) connected to one end of the cable unit and connected to the encoder.

2. The rotating electrical machine cable according to claim 1, wherein the rotating electrical machine side connector case and the encoder side connector case are connected in parallel to each other to one end of the cable unit.

3. The rotating electrical machine cable according to claim 2 further comprising:
a branching member (12) connected to one end of the cable unit and including two branching parts (12a1, 12a2, 12b1, 12b2),
wherein the rotating electrical machine side connector case is connected to one branching part (12a1, 12b1) of the branching member, and
wherein the encoder side connector case is connected to the other branching part (12a2, 12b2) of the branching member.

4. The rotating electrical machine cable according to claim 3, wherein the branching member is configured such that a length of the one branching part and a length of the other branching part are different to each other.

5. The rotating electrical machine cable according to claim 1, wherein the rotating electrical machine side connector case and the encoder side connector case are connected in series to each other to one end of the cable unit.

6. The rotating electrical machine cable according to claim 5, wherein the rotating electrical machine side connector case is arranged between the cable unit and the encoder side connector case.

7. The rotating electrical machine cable according to claim 6 further comprising a connection tube (22) connecting the rotating electrical machine side connector case and the encoder side connector case.

8. The rotating electrical machine cable according to any one of claims 1 to 7,
wherein the cable unit has therein
an encoder side cable (32) connected to the encoder side connector; and
a rotating electrical machine side cable (33) arranged in outer peripheral side of the encoder side cable and connected to the rotating electrical machine side connector.

9. The rotating electrical machine cable according to claim 8, wherein the encoder side cable is covered with a shield material (33) for suppressing penetration of an electromagnetic wave.

10. The rotating electrical machine cable according to claim 3,
wherein the cable unit has therein
an encoder side cable (32) connected to the encoder side connector; and a rotating electrical machine side cable (33) connected to the rotating electrical machine side connector,
wherein the encoder side cable is configured to be exposed from the other branching part of the branching member and, further, is covered by a sheath (35).
